(19) Europäisches Patentamt
European Patent Office
Office européen des brevets

(11) **EP 2 575 332 A1**

(12) **EUROPEAN PATENT APPLICATION**

(43) Date of publication:
**03.04.2013 Bulletin 2013/14**

(51) Int Cl.:
*H04M 1/725* (2006.01)          *G06F 3/01* (2006.01)
*G01S 11/10* (2006.01)

(21) Application number: **11306265.7**

(22) Date of filing: **30.09.2011**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**

(71) Applicant: **FRANCE TELECOM
75015 Paris (FR)**

(72) Inventors:
• **Zemek, Radim
1890013 TOKYO (CZ)**
• **Derham, Thomas
TOKYO, 194-0022 (GB)**

(54) **Method for transferring data between two devices**

(57)     The invention relates to a method for wirelessly transferring data between a first and at least a second device by means of a radio signal; the method comprising the steps of :
- detecting a shift in a pre-determined frequency of a signal used by the first and second devices for wirelessly communicating, said frequency shift being caused by the first device motion relatively to the second device,
- initiating the transferring of the data between the first and the second device.

Fig. 1

EP 2 575 332 A1

**Description**

The present invention generally relates to communication between wireless devices. More particularly, the invention relates to triggering data transmission between wireless devices.

Devices and more particularly mobile devices such as tablets, phones, MP3 players, etc. exchange data with others devices especially for synchronization with other devices such as desktop computers, printers, displays, speakers, etc. Synchronization is an automatic mode of communication between two devices.

Sometimes, there is a need for exchanging data between a mobile device and another device out of a synchronization mode. In such circumstances, more interactions on the user's part is required.

In order to trigger data transmission between two devices which are not in synchronization mode, the user wishing to transfer data, have to select on his device the data to be transmitted, e.g. a picture, a bookmark, to select the receiving device, e.g. a printer, a desktop computer, and then trigger the data transmission.

Nowadays, most of the mobile devices are equipped with accelerometers. Accelerometers enable users' gesture to be interpreted and to trigger certain actions. For example, an accelerometer embedded in a mobile device is used to interpret throw and pull gesture as a trigger to data transmission between the mobile device and another device.

However, such a method has drawbacks. Indeed, when a plurality of devices can be the intended receiving device, the user still need to select the intended receiving device among the plurality of receiving devices. For example, a throwing gesture of a mobile device in order to trigger the transmission of a picture stored in the mobile device might be correctly interpreted as displaying the picture on a nearby screen or incorrectly as printing the picture on the nearby printer. In order to lift such an ambiguity up, the user needs to select the intended receiving device manually.

Hence there is a need for a solution enabling easy data transmission between wireless devices with minimal user intervention.

To that extend, the present invention relates to a method for wirelessly transferring data between a first and at least a second device by means of a signal; the method comprising the steps of :

- detecting a shift in a pre-determined frequency of a signal used by the first and second devices for wirelessly communicating, said frequency shift being caused by the first device motion relatively to the second device,
- initiating the transferring of the data between the first and the second device.

Such a method enables easy data transmission between at least two devices with minimal user intervention. For this purpose, the invention uses Doppler Effect and its characteristics in order to trigger data transmission between two devices.

Using Doppler Effect enables accurately interpreting user's gestures, as it is well known that Doppler Effect is exhibited when the transmitting and receiving devices are in motion with respect to each other. Thus the method of the invention can be used to detect a targeted device, i.e. a device with which a user wishes to exchange data, among a plurality of other devices, assuming that the user naturally moves his device toward the targeted device.

This is made possible because the shift in frequency typical of Doppler Effect, or Doppler shift, is proportional, not only to the speed of the device, but also to the direction of the motion with respect to the different devices positions. Hence, the user does not need to select the targeted device among a plurality of devices as it is the case in the prior art.

The method of the invention enables pairing two devices as well.

Further the method of the invention comprises a step of comparing the absolute value of the shift in the pre-determined frequency of the signal used by the first and second devices to at least a threshold, the transferring of the data between the first and the second device being initiated when the absolute value of the shift in the pre-determined frequency of the signal is greater than the threshold.

Comparing the absolute value of the shift in the pre-determined frequency of the signal used by the first and second devices enables to filter out unintentional gestures and random movements of the user, such as example given, walking towards or away from a given device. If the absolute value of the shift of the pre-determined frequency of the signal used by the first and second devices is bellow the threshold, no data transmission is initiated between the two devices. In addition, if the first device is capable of sensing whether a user is holding the first device, this information could be also used as additional metric.

The method of the invention also comprises a step of identifying the second device, among a plurality of other devices, by comparing absolutes value of the shift in the pre-determined frequencies of the signals used by the first and the plurality of other devices, the highest shift in the pre-determined frequencies of the signals identifying the second device.

The data transmission is triggered only between devices that observe the highest absolute Doppler shift.

The method of the invention further comprises, when at least two devices have the same shift in the pre-determined frequencies of the signals identifying those two devices, a step of retrieving from each device a context-related information enabling the identification of the second device.

By retrieving context-related information from the devices, it is possible to identify the second device without intervention of the user. In other words, there is no need for the user to select the device that is the intended recipient of the data to be transmitted among all possible devices. A context-related information is for example the type of data to be transmitted, e.g. a picture, and the type of the possible recipient devices, e.g. if the possible recipient devices are a speaker and a printer, the transmission of the data (a picture) will occur between the user's device and the printer.

Another example of context-related information is the strength of the received signal. The strength of the received signal indicates the distances between the first device and a plurality of other devices and only the device closest to the first device is selected. This information could be applied together with the preciously mentioned context-related information method.

In another embodiment of the method of the invention, the method further comprises the steps of :

- determining which one of the first and second devices is a relatively static device by means of context-related information,
- and determining if the shift in the pre-determined frequency of the signal used by the first and second devices consists in an increase of the value of the pre-determined frequency of the signal used by the first and second devices, in this case, the data is transmitted from the moving device to the relatively static device.

Each device recognizes whether it is a static device or not either by using a profile information, such as the nature of the device, e.g. a television is considered a static device while a tablet is considered a mobile device, or by using an accelerometer embedded in the device measuring and detecting whether the device is motion or not. Alternatively, any sensor capable of measuring relative motion of a device, e.g. gyroscope, could be used.

If the second device is the static one, the increase in the pre-determined frequency of the signal means that the first device moves toward the second device. This movement of the first device toward the second device is interpreted as initiating data transmission from the first device to the second device.

On the other hand, a decrease in the pre-determined frequency of the signal means that the first device moves away from the second device. This movement of the first device away from the second device is interpreted as initiating data transmission from the second device to the first device.

The same mechanism can be used for devices pairing. When moving the first and second device toward each other causes an increase in the pre-determined frequency of the signal, it is interpreted as initiating the pairing of the devices. When moving the first and second device away from each other causes a decrease in the pre-determined frequency of the signal, it is interpreted as initiating the devices disconnection.

An object of the invention is a wireless device intended for transferring data to at least another device by means of a signal of a pre-determined frequency; the device comprising means for:

- detecting a shift in the pre-determined frequency of the signal used by the device and the other device for wirelessly communicating, said frequency shift being caused by the device motion relatively to the other device,
- initiating the transferring of the data between the device and the other device by means of a radio signal.

Another object of the invention is a communication system comprising a first and at least a second device wirelessly communicating by means of a signal of a pre-determined frequency, each device comprising means for :

- detecting a shift in the pre-determined frequency of the signal used by the device and the other device for transferring data, said frequency shift being caused by the device motion relatively to the other device,
- initiating the transferring of the data between the device and the other device by means of a radio signal.

Finally, one objet of the invention concerns a computer program, in particular a computer program on or in an information medium or memory, suitable for implementing the method for wirelessly transferring data between a first and at least a second device by means of a radio signal object of the invention. This program can use any programming language, and be in the form of source code, binary code, or of code intermediate between source code and object code such as in a partially compiled form, or in any other desirable form for implementing the configuration method according to the invention.

The information medium may be any entity or device capable of storing the program. For example, the medium can comprise a storage means, such as a ROM, for example a CD ROM or a microelectronic circuit ROM, or else a magnetic recording means, for example a diskette (floppy disk) or a hard disk.

Moreover, the information medium may be a transmissible medium such as an electrical or optical signal, which may be conveyed via an electrical or optical cable, by radio or by other means. The program according to the invention may in particular be downloaded from a network of Internet type.

The present system and method are explained in further detail, and by way of example, with reference to the accompanying drawings wherein:

Figure 1 represents a system in which a method for wirelessly transferring data between a plurality of devices according to the invention is run,
Figure 2 represents a sequence diagram of the steps of the method of the invention,
Figure 3 represents a device implementing the method of the invention.

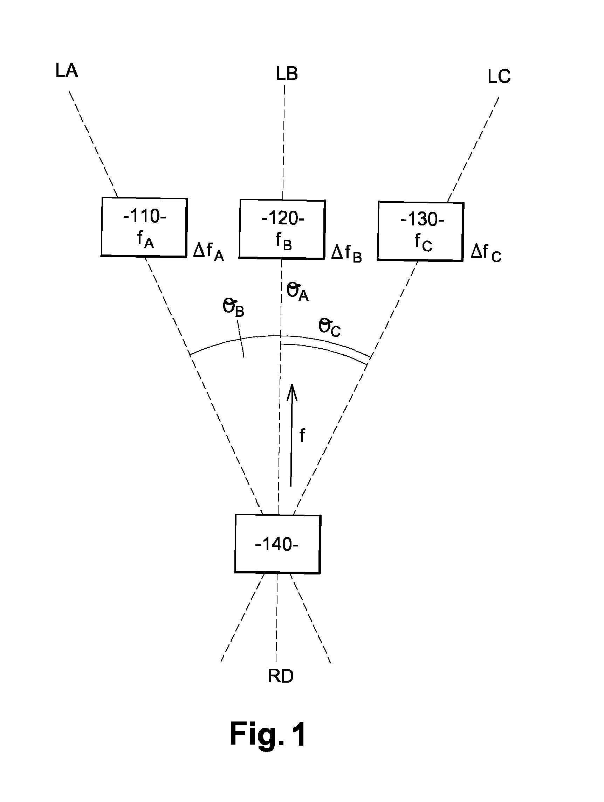

**Figure 1** represents a system in which a method for wirelessly transferring data between a plurality of devices is run.

Such a system comprises, for example, at least four devices 110, 120, 130 and 140. Those four devices can communicate with each other by means of radio signals, the frequency of each radio signal depending on the wireless communication technology used by the devices. Such wireless communication technologies can be for example Bluetooth ®, WiFi Direct, or any other wireless technology, like a technology based on ultrasounds. In figure 1, the three devices 110, 120, and 130 are aligned, it is to be understood that those devices could be placed differently, i.e. the devices 110, 120, 130 can be placed on different planes and on different lines. The invention can be implemented with more than four devices.

The first device 110 is for example a desktop computer, the second device 120 is for example a printer, the third device 130 is for example a tablet, and the fourth device 140 is a mobile phone.

Data are stored in the fourth device 140 such as pictures, music files, bookmarks, etc. In reference to figure 1, the user of the fourth device 140 whishes to transmit data, e.g. a picture, to the second device 120 in order to print the picture. In this example, the first device 110, the second device 120, the third device 130 and the fourth device 140 communicate with each other using WiFi technology. The radio signal used to transmit data between the two devices 120 and 140 has a pre-determined frequency f of 2,4 GHz (GigaHertz). In other embodiments of the method according to the invention, each pair of device can communicate using different technologies. For example, the first device 110 and the fourth device 140 can communicate using WiFi technology; the third device 130 and the fourth device 140 communicate using Bluetooth ®; while the first device 110 and the second device 120 can communicate using sound or optic signal. In order to initiate the data transmission from the fourth device 140 to the second device 120, the user of the fourth device 140 moves the fourth device 140 towards the second device 120. This movement of the fourth device 140 toward the second device 120 leads to a shift $\Delta f_B$ in the pre-determined frequency f, increasing the value of the pre-determined frequency f detected by the second device 120 and the fourth device 140. This movement of the fourth device 140 toward the second device 120 leads to a shift $\Delta f_A$ in the pre-determined frequency f detected by the first device 110 and the fourth device 140 and to a shift $\Delta f_C$ in the pre-determined frequency f detected by the third device 130 and the fourth device 140 as well.

In an embodiment, the first device 110, the second device 120, the third device 130 and the fourth device 140 can communicate using sound signal while using for example WiFi technology for transmitting data.

In this embodiment, in order to initiate the data transmission from the fourth device 140 to the second device 120, it is the shift in the pre-determined frequency of the sound signal that is measured, the data being transmitting using WiFi.

The shifts $\Delta f_A$, $\Delta f_B$ and $\Delta f_C$ in the pre-determined frequency f are proportional to the pre-determined frequency f, the velocity v of the fourth device 140, assuming that the first device 110, the second device 120 and the third device 130 are in a relatively static position, the direction $\theta_A$, $\theta_B$ and $\theta_C$ of the movement of the fourth device 140 relatively to the other devices 110, 120 and 130 and inversely proportional to the speed of light c :

$$\Delta f = f_I - f$$

where f is pre-determined frequency and $f_i$ is the measure received frequency:

$$f_I \approx \frac{v}{c} f \cos \theta$$

The direction of a movement is defined by the angle $\theta_A$, $\theta_B$ or $\theta_C$ formed by the intersection of a reference direction RD and a line LA, LB, LC. In reference to figure 1, the reference direction RD and the line LB are one and same. In other embodiments of the system of the invention, the reference direction RD and the lines LA, LB, LC are not identical.

Thus, the angle $\theta_A$ represents the direction of the movement of the fourth device 140 relatively to the second device 120. The angle $\theta_A$ is formed by the intersection of the reference direction RD and a line LB joining the fourth device 140 and the second device 120. In this embodiment, $\theta_A = 0$.

The angle $\theta_B$ represents the direction of the movement of the fourth device 140 relatively to the first device 110. The angle $\theta_B$ is formed by the intersection of the reference direction RD and a line LA joining the fourth device 140 and the first device 110.

The angle $\theta_c$ represents the direction of the movement of the fourth device 140 relatively to the third device 130. The angle $\theta_c$ is formed by the intersection of the reference direction RD and a line LC joining the fourth device 140 and the third device 130.

The shifts $\Delta f_A$, $\Delta f_B$ and $\Delta f_C$ in the pre-determined frequency $f$ can also be expressed using the frequencies $f_A$, $f_B$, $f_C$ of respectively received signals by the first device 110, the second device 120 and the third device 130 :

$$\Delta f = f_l - f$$

Upon detection of a shift in the pre-determined frequency $f$ by the four devices 110, 120, 130 and 140, the values of these shifts $\Delta f_A$, $\Delta f_B$ and $\Delta f_C$ in the pre-determined frequency f are calculated by the four devices 110, 120, 130 and 140.

Then, the absolute values of those three shifts in the pre-determined frequency $f$ $|\Delta f_A|$, $|\Delta f_B|$ and $|\Delta f_C|$ are compared to a threshold S. Comparing the absolute values of the shifts $|\Delta f_A|$ , $|\Delta f_B|$ and $|\Delta f_C|$ in the pre-determined frequency $f$ enables to filter out unintentional gestures and random movements of the fourth device 140. If the absolute value of the shifts of the pre-determined frequency $f|\Delta f_A|$, $|\Delta f_B|$ and $|\Delta f_C|$ are bellow the threshold S, no data transmission is initiated between the two devices.

In the present embodiment, only the absolute value of the shift $|\Delta f_B|$ and $|\Delta f_C|$ of the pre-determined frequency f is above the threshold S. Consequently $|\Delta f_B|$ and $|\Delta f_C|$ are compared, $|\Delta f_B|$ is higher value. That means that data transmission is only possible between the second device 120 and the second device 140.

The second device 120 and the fourth device 140 then enter a transmission mode. In this transmission mode, the second and fourth devices determine whether the velocity v is positive or negative. If the velocity v is positive, it assumed that the fourth device 140 moves toward the second device 120. If the velocity v is negative, it assumed that the fourth device 140 moves away from the second device 120.

In our example, the velocity v is positive. The second device 120 and the fourth device 140 interpret this information as a triggering of the transmission of the picture from the fourth device 140 to the second device 120.

The second device 120 and the fourth device 140 interpret a negative value of the velocity as a triggering of the transmission of the picture from the second device 120 to the fourth device 140.

Such a method can be used to trigger pairing of two devices or to trigger disconnection of two devices.

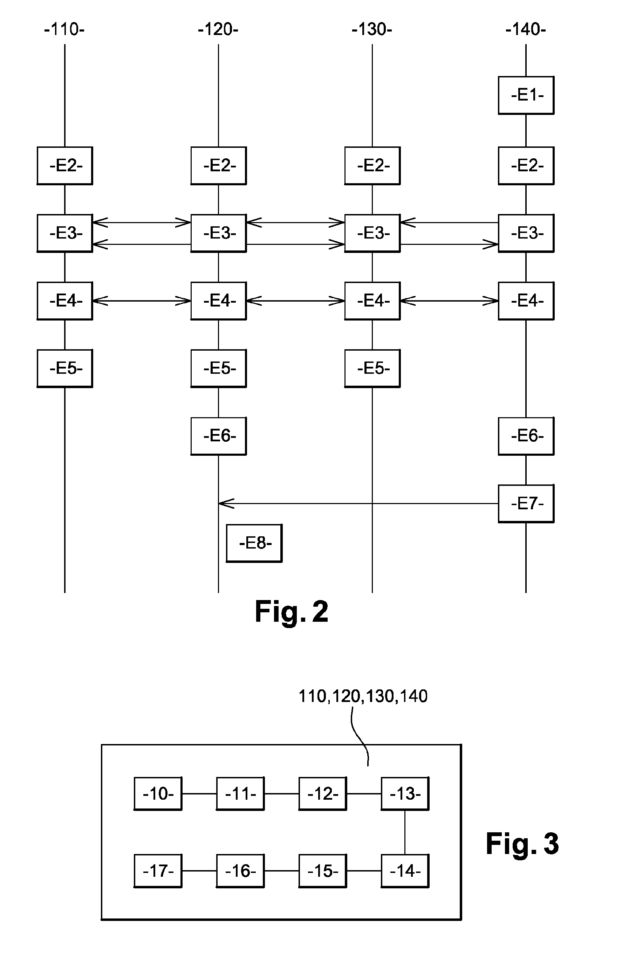

**Figure 2** represents a sequence diagram of exchanges between the first device 110, the second device 120, the third device 130 and the fourth device 140.

The user of the fourth device 140 whishes to transfer data, for example a picture, to the second device 120.

In a step E1, the user shakes the fourth device towards the second device 120. This movement of the fourth device 140 induces a shift in the pre-determined frequency $f$ of the radio signal used by the devices 110, 120, 130 and 140 to communicate.

In a step E2, each device 110, 120, 130 measure the frequencies $f_A$, $f_B$, $f_C$ of the signals respectively received by the first device 110, the second device 120 and the third device 130 and calculate the value of a shift $\Delta f_A$, $\Delta f_B$ and $\Delta f_C$ in the pre-determined frequency f.

In another embodiment of the invention, the fourth device 140 can also perform the measurements of the the frequencies $f_A$, $f_B$, $f_C$ and the calculations of the shifts $\Delta f_A$, $\Delta f_B$ and $\Delta f_C$ in the pre-determined frequency $f$.

In a step E3, each device 110, 120, 130 and 140 compares the absolute values of those three shifts in the pre-determined frequency $f$ $|\Delta f_A|$, $|\Delta f_B|$ and $|\Delta f_C|$ to a threshold S. Comparing the absolute values of the shifts $|\Delta f_A|$, $|\Delta f_B|$ and $|\Delta f_C|$ in the pre-determined frequency f enables to filter out unintentional gestures and random movements of the fourth device 140.

In a step E4, assuming that all the absolute values of the shifts $|\Delta f_A||\Delta f_B|$ and $|\Delta f_C|$ are above the threshold S, the first device 110, the second device 120, the third device 130 exchange their respective values of the shift $\Delta f_A$, $\Delta f_B$ and $\Delta f_C$ in the pre-determined frequency f among themselves and with the fourth device 140.

In another embodiment of the invention a master device (not represented on the figures) collects all the absolute values of the shifts $|\Delta f_A|$, $|\Delta f_B|$ and $|\Delta f_C|$ and compares them to the threshold S on behalf of all the devices110, 120, 130 and 140, and inform them back.

In a step E5, each device 110, 120 and 130 compares the absolute values of those three shifts in the pre-determined frequency $f|\Delta f_A|$, $|\Delta f_B|$ and $|\Delta f_C|$ to each other in order to determine the highest shift in the pre-determined frequency f. In this embodiment, the highest shift in the pre-determined frequency f is $\Delta f_B$. In the embodiment of the invention using the master device, the master device compares all the absolute values of the shifts $|\Delta f_A|$, $|\Delta f_B|$ and $|\Delta f_C|$

to each other. in order to determine the highest shift in the pre-determined frequency *f*.

This information means that the picture is to be transmitted between the fourth device 140 and the second device 120. If at least two devices have the same shift in the pre-determined frequency *f*, a step of retrieving from each device a context-related information enabling the identification of the second device. By retrieving context-related information from the devices110, 120, 130, it is possible to identify the second device 120 without intervention of the user.

In other words, there is no need for the user to select the device that is the intended recipient of the data to be transmitted among all possible devices. A context-related information is for example the type of data to be transmitted, e.g. a picture, and the type of the possible recipient devices, e.g. if the possible recipient devices are a speaker and a printer, the transmission of the data (a picture) will occur between the user's device and the printer. Another example of context-related information is the strength of the received signal that indicates the distance between devices and transmission between the closest deices is initiated.

When the step E5 is completed, the second device 120 and the fourth device 140 enter a transmission mode.

In this transmission mode, during a step E6, the fourth device 140 and the second device 120 determine which one of them is in a relatively static position by means of context-related information.

Each device 140, 120 recognizes whether it is a static device or not either by using a profile information, such a s the nature of the device, e.g. a printer is considered a static device while a tablet or a mobile phone is considered a mobile device, or by using an accelerometer embedded in the device measuring and detecting whether the device is motion or not. For example, device 140 being a mobile phone, it embeds an accelerometer. The accelerometer embedded in device 140 enables the detection of the movement given to the device by the user.

Still during step E6, the fourth device 140 and the second device 120 determine, as well, if the shift $\Delta f_B$ in the pre-determined frequency f consists in an increase of the value of the pre-determined frequency for not.

Since the second device 120, the printer, is the static one, the increase in the pre-determined frequency *f* means that the fourth device 140 moves toward the second device 120. This movement of the fourth device 140 toward the second device 120 is interpreted as initiating data transmission from the fourth device 140 to the second device 120.

Thus, in a step E7, the fourth device 140 triggers the transmission of the picture to the second device 120.

In a step E8, device 120, the printer, prints the picture out. Optionally, the picture is printed out after a confirmation on the printer.

The same mechanism can be used for devices pairing. When moving the fourth device 140 and the second device 120 toward each other causes an increase in the pre-determined frequency *f*, it is interpreted as initiating the pairing of the devices. When moving the fourth device 140 and the second device 120 away from each other causes a decrease in the pre-determined frequency of the radio signal, it is interpreted as initiating the devices disconnection.

**Figure 3** represents a device 110, 120, 130, 140 implementing the method of the invention.

Such a device 110, 120, 130, 140 comprises means 10 for measuring the frequencies $f_A$, $f_B$, $f_C$ of the signals it receives.

The means for measuring 10 the frequencies $f_A$, $f_B$, $f_C$ are connected to means for calculating 11 the value of a shift $\Delta f_A$, $\Delta f_B$ and $\Delta f_C$ in the pre-determined frequency f.

The device 110, 120, 130, 140 comprises means for comparing 12 the absolute values of those three shifts in the pre-determined frequency $f|\Delta f_A|$, $|\Delta f_B|$ and $|\Delta f_C|$ to a threshold S. the means the absolute values of those three shifts in the pre-determined frequency are connected to means for calculating 11 the value of a shift $\Delta f_A$, $\Delta f_B$ and $\Delta f_C$ in the pre-determined frequency *f*.

The device 110, 120,130, 140 comprises, connected to the means 12, means for exchanging 13 their respective values of the shift $\Delta f_A$, $\Delta f_B$ and $\Delta f_C$ in the pre-determined frequency f.

The device 110, 120, 130 and 140 comprises, connected to the means 13, means for comparing 14 the absolute values of those three shifts in the pre-determined frequency $f|\Delta f_A|$, $|\Delta f_B|$ and $|\Delta f_C|$ to each other in order to determine the highest shift in the pre-determined frequency f.

The device 110, 120, 130, 140 comprises, connected the means 14, means for determining which one of them is in a relatively static position by means of context-related information. Such means 14 can be an accelerometer embedded in the device measuring and detecting whether the device is motion or not.

The device 110, 120, 130, 140 comprises, connected to the means 14, means for determining 15 if the shift in the pre-determined frequency f consists in an increase of the value of the pre-determined frequency for not.

The device 110, 120, 130, 140 comprises, connected to means 15, means for triggering 16 the transmission of the data to another device and connected to the means 16, means for transmitting the data 17.

## Claims

1. A method for wirelessly transferring data between a first and at least a second device by means of a radio signal; the method comprising the steps of :

- detecting a shift in a pre-determined frequency of a signal used by the first and second devices for wirelessly communicating, said frequency shift being caused by the first device motion relatively to the second device,
- initiating the transferring of the data between the first and the second device.

2. The method of claim 1, comprising a step of comparing the absolute value of the shift in the pre-determined frequency of the signal used by the first and second devices to at least a threshold, the transferring of the data between the first and the second device being initiated when the absolute value of the shift in the pre-determined frequency of the signal is greater than the threshold.

3. The method of claim 2 comprising a step of identifying the second device, among a plurality of other devices, by comparing absolutes value of the shift in the pre-determined frequencies of the signals used by the first and the plurality of other devices, the highest shift in the pre-determined frequencies of the signals identifying the second device.

4. The method of claim 3 comprising, when at least two devices have the same shift in the pre-determined frequencies of the signals identifying those two devices, a step of retrieving from each device a context-related information enabling the identification of the second device.

5. The method of claim 1, comprising the steps of :

- determining which one of the first and second devices is a relatively static device by means of context-related information,
- and determining if the shift in the pre-determined frequency of the signal used by the first and second devices consists in an increase of the value of the pre-determined frequency of the signal used by the first and second devices,

in this case, the data is transmitted from the moving device to the relatively static device.

6. A wireless device intended for transferring data at least another device by means of a radio signal; the device comprising means for :

- detecting a shift in a pre-determined frequency of a signal used by the device and the other device for wirelessly communicating, said frequency shift being caused by the device motion relatively to the other device,
- initiating the transferring of the data between the device and the other device by means of a radio signal.

7. A communication system comprising a first and at least a second device wirelessly communicating by means of a signal of a pre-determined frequency, each device comprising means for :

- detecting a shift in the pre-determined frequency of the signal, said frequency shift being caused by the device motion relatively to the other device,
- initiating the transferring of the data between the device and the other device by means of a radio signal.

8. Computer program **characterized in that** it comprises program code instructions for the implementation of the steps of the data transferring method as claimed in claim 1 when the program is executed by a processor.

**Fig. 1**

-110-  -120-  -130-  -140-

-E1-

-E2-  -E2-  -E2-  -E2-

-E3- ⇄ -E3- ⇄ -E3- ⇄ -E3-

-E4- ⟷ -E4- ⟷ -E4- ⟷ -E4-

-E5-  -E5-  -E5-

-E6-  -E6-

-E7-

-E8-

**Fig. 2**

110,120,130,140

-10- — -11- — -12- — -13-

-17- — -16- — -15- — -14-

**Fig. 3**

Europäisches
Patentamt

European
Patent Office

Office européen
des brevets

# EUROPEAN SEARCH REPORT

Application Number

EP 11 30 6265

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | WO 2008/007175 A1 (SONY ERICSSON MOBILE COMM AB [SE]; AHLGREN ERIK [SE]; MEIBY LINDA [SE]) 17 January 2008 (2008-01-17) | 1,2,6-8 | INV.<br>H04M1/725<br>G06F3/01 |
| A | * abstract *<br>* page 9, lines 3,4,25-33 *<br>* page 10, lines 16,30-33 *<br>* page 11, lines 34,35 *<br>* figures 1-5 * | 3-5 | ADD.<br>G01S11/10 |
| A | US 2007/211573 A1 (HERMANSSON JONAS G [SE]) 13 September 2007 (2007-09-13)<br>* abstract * | 1-8 | |
| | ----- | | |

TECHNICAL FIELDS
SEARCHED (IPC)

H04M
G06F
G01S

The present search report has been drawn up for all claims

| Place of search | Date of completion of the search | Examiner |
|---|---|---|
| Munich | 27 January 2012 | Pohl, Martin |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

**EP 2 575 332 A1**

## ANNEX TO THE EUROPEAN SEARCH REPORT
## ON EUROPEAN PATENT APPLICATION NO.

EP 11 30 6265

This annex lists the patent family members relating to the patent documents cited in the above-mentioned European search report.
The members are as contained in the European Patent Office EDP file on
The European Patent Office is in no way liable for these particulars which are merely given for the purpose of information.

27-01-2012

| Patent document cited in search report | | Publication date | Patent family member(s) | | Publication date |
|---|---|---|---|---|---|
| WO 2008007175 | A1 | 17-01-2008 | CN | 101491066 A | 22-07-2009 |
| | | | EP | 2050260 A1 | 22-04-2009 |
| | | | JP | 2009543495 A | 03-12-2009 |
| | | | KR | 20090028617 A | 18-03-2009 |
| | | | TW | 200805902 A | 16-01-2008 |
| | | | US | 2008039212 A1 | 14-02-2008 |
| | | | WO | 2008007175 A1 | 17-01-2008 |
| US 2007211573 | A1 | 13-09-2007 | CN | 101401057 A | 01-04-2009 |
| | | | US | 2007211573 A1 | 13-09-2007 |

EPO FORM P0459

For more details about this annex : see Official Journal of the European Patent Office, No. 12/82